(19) Europäisches Patentamt / European Patent Office / Office européen des brevets

(11) **EP 3 640 107 B1**

(12) **EUROPEAN PATENT SPECIFICATION**

(45) Date of publication and mention
of the grant of the patent:
**10.07.2024 Bulletin 2024/28**

(21) Application number: **18817421.3**

(22) Date of filing: **30.05.2018**

(51) International Patent Classification (IPC):
*G06V 20/58* (2022.01)   *B60W 30/16* (2020.01)
*B60K 31/00* (2006.01)   *B60W 40/04* (2006.01)
*G08G 1/16* (2006.01)

(52) Cooperative Patent Classification (CPC):
**B60W 30/16; B60K 31/00; B60W 40/04;
G06V 20/58; G08G 1/16;** B60W 2420/403;
B60W 2520/10; B60W 2520/14; B60W 2540/18;
B60W 2552/53; G06V 2201/08

(86) International application number:
**PCT/JP2018/020666**

(87) International publication number:
**WO 2018/230342 (20.12.2018 Gazette 2018/51)**

(54) **VEHICLE DRIVING ASSISTANCE DEVICE**

FAHRUNTERSTÜTZUNGSVORRICHTUNG FÜR EIN FAHRZEUG

DISPOSITIF D'ASSISTANCE À LA CONDUITE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2017 JP 2017115504**

(43) Date of publication of application:
**22.04.2020 Bulletin 2020/17**

(73) Proprietor: **Hitachi Astemo, Ltd.
Hitachinaka-shi, Ibaraki 312-8503 (JP)**

(72) Inventor: **MITOMA, Hiroto
Hitachinaka-shi
Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
JP-A- 2001 088 574   JP-A- 2004 106 697
JP-A- 2005 081 999   JP-A- 2006 053 890
JP-A- 2009 132 323   JP-A- 2009 149 255
JP-A- 2009 149 255   US-A1- 2009 125 204

## Description

Technical Field

The present invention relates to a driving assistance device for detecting a preceding vehicle and controlling travel following the preceding vehicle.

Background Art

In recent years, driving assistance devices have been proposed to perform various control for a host vehicle on the basis of external environment recognition information, including a relative position between a host vehicle and a preceding vehicle, detected by a sensor, such as an in-vehicle stereo camera, monocular camera, millimeter-wave radar, or laser radar, for recognizing external environment.

Some of the driving assistance devices having such functions have a control function for controlling a vehicle so as to maintain a set vehicle speed and further have a following function, when detecting a preceding vehicle having a vehicle speed slower than the set vehicle speed, for following the preceding vehicle while keeping a certain distance on the basis of information on a position or speed relative to the preceding vehicle.

This following function is generally called Adaptive Cruise Control (ACC), and some ACC systems cancel following a preceding vehicle when a vehicle speed becomes lower than a predetermined vehicle speed (e.g., 40 km/h) and some ACC systems follow a preceding vehicle in the full speed range.

In a vehicle driving assistance device configured to follow a preceding vehicle in the full speed range, when following the preceding vehicle at a low speed, the preceding vehicle disappears (the preceding vehicle is not detected, disappears from a car-mounted image display unit, or is not targeted (not detected)) due to a short distance from a host vehicle to the preceding vehicle, and when acceleration is started immediately to the set vehicle speed in such a state, the system has no time to understand a traffic situation ahead, providing a driver the feeling of discomfort or sense of danger.

On the other hand, PTL 1 discloses a technology in which the speed of a host vehicle is maintained to that when a preceding vehicle disappears from view, for a certain time period after the preceding vehicle disappears from view, and then the vehicle speed is increased to a set vehicle speed, inhibiting the driver's feeling of discomfort or sense of danger. Furthermore, PTL 2 discloses a method for capturing a preceding vehicle in a lane in which the own vehicle is traveling, wherein a curve in a travel road is detected when the preceding vehicle is lost while following said preceding vehicle, and wherein an acceleration/deceleration is corrected according to a radius of the curve when a set time has passed after the preceding vehicle is lost and the curve in the travel road is detected. PTL 3 discloses a vehicle drive assist system, wherein a steering-control-amount calculation unit is configured to calculate a steering control amount on the basis of a previously determined target position. Eventually, PTL 4 discloses a forward recognition unit that recognizes at least the lane in which the own vehicle is travelling and the vehicle in front that is travelling in the lane in which the own vehicle is travelling, wherein a target vehicle speed is set so that the actual acceleration in a case, wherein the vehicle transitions to the constant speed travelling control after the vehicle changes its course to an adjacent travelling lane, is greater than the actual acceleration in a case, wherein the vehicle transitions to the constant speed travelling control after the preceding vehicle leaves the vehicle in front of the vehicle.

Citation List

Patent Literature

     PTL 1: JP 2009-18727 A
     PTL 2: JP 2005 081 999 A
     PTL 3: US 2009 / 125 204 A1
     PTL 4: JP 2009 149 255 A

Summary of Invention

Technical Problem

However, in the related art described above, for example, in a case where while the preceding vehicle is being followed, the preceding vehicle is decelerated to make a left turn, and thereafter the preceding vehicle makes a left turn and disappears from view, performance of control to maintain the speed of the host vehicle to that when the preceding vehicle disappears from view, for a certain time period, in spite of the preceding vehicle being out of a travel route of the host vehicle, may cause discomfort for the driver of the host vehicle.

Furthermore, maintaining the speed of the host vehicle to that when the preceding vehicle disappears although the preceding vehicle is out of the host vehicle travel route is an unnecessary vehicle speed maintenance operation, and this operation may also obstruct smooth travel of a following vehicle behind the host vehicle.

The present invention has been made in view of such circumstances, and an object of the present invention is to achieve a vehicle driving assistance device that can reduce unnecessary vehicle speed holding time causing discomfort to a driver of a vehicle, and can assist the smooth running of the vehicle.

Solution to Problem

In order to achieve the above object, the present invention is configured in accordance to the appended set of claims. Preferable embodiments are claimed by the dependent claims.

Advantageous Effects of Invention

According to the present invention, a vehicle driving assistance device can be achieved which can promptly confirm disappearance of a preceding vehicle accurately, can reduce an unnecessary vehicle speed holding time causing discomfort to a driver of a vehicle, and can assist the smooth travel of the vehicle.

Brief Description of Drawings

[FIG. 1] FIG. 1 is an explanatory diagram illustrating an entire configuration of a vehicle driving assistance device according to an example of the present invention.
[FIG. 2] FIG. 2 is a functional block diagram illustrating a stereo camera according to an example of the present invention.
[FIG. 3] FIG. 3 is a diagram illustrating the principle of general distance measurement by using the stereo camera.
[FIG. 4] FIG. 4 is a diagram illustrating the principle of distance measurement.
[FIG. 5] FIG. 5 is a graph illustrating consistency between images.
[FIG. 6] FIG. 6 is a graph illustrating consistency between images when the same image is not found in left and right images.
[FIG. 7] FIG. 7 is an explanatory diagram illustrating an operation of a leaving determination processing unit according to an example of the present invention.
[FIG. 8] FIG. 8 is an explanatory diagram illustrating an operation of a leaving determination processing unit according to an example of the present invention.
[FIG. 9] FIG. 9 is a flowchart illustrating a process of traveling control performed by a control processing unit according to an example of the present invention.

Description of Embodiments

Hereinafter, embodiments of the present invention will be described with reference to the accompanying drawings.

Examples

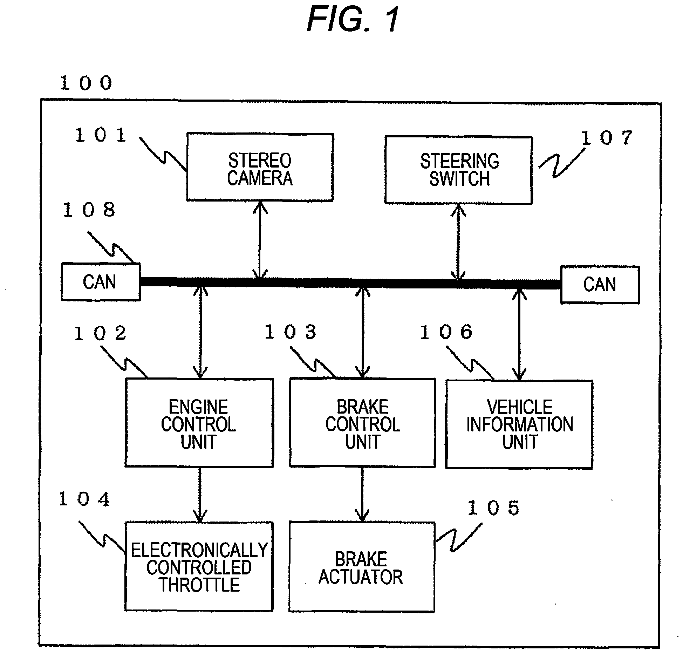

FIG. 1 is an explanatory diagram illustrating an entire configuration of a vehicle driving assistance device 100 according to an example of the present invention.

In FIG. 1, the vehicle driving assistance device 100 includes a stereo camera 101 as an external environment recognition sensor, an engine control unit 102, a brake control unit 103, an electronically controlled throttle 104, and a brake actuator 105 as a unit for performing vehicle control, and a vehicle information unit 106 for acquiring vehicle information, such as steering angle, yaw rate, and host vehicle speed Vown.

Furthermore, the vehicle driving assistance device 100 includes a steering switch 107 for setting a vehicle speed Vset in ACC, and a controller area network (CAN) 108 for transmitting information between the stereo camera 101, the units 102, 103, and 106, which are sensors, and the steering switch 107.

The engine control unit 102, the brake control unit 103, the electronically controlled throttle 104, the brake actuator 105, and the vehicle information unit 106 constitute a vehicle operation control unit. Operation of the vehicle operation control unit is controlled by a control instruction from a control processing unit (travel control processing unit) 211, which is described later.

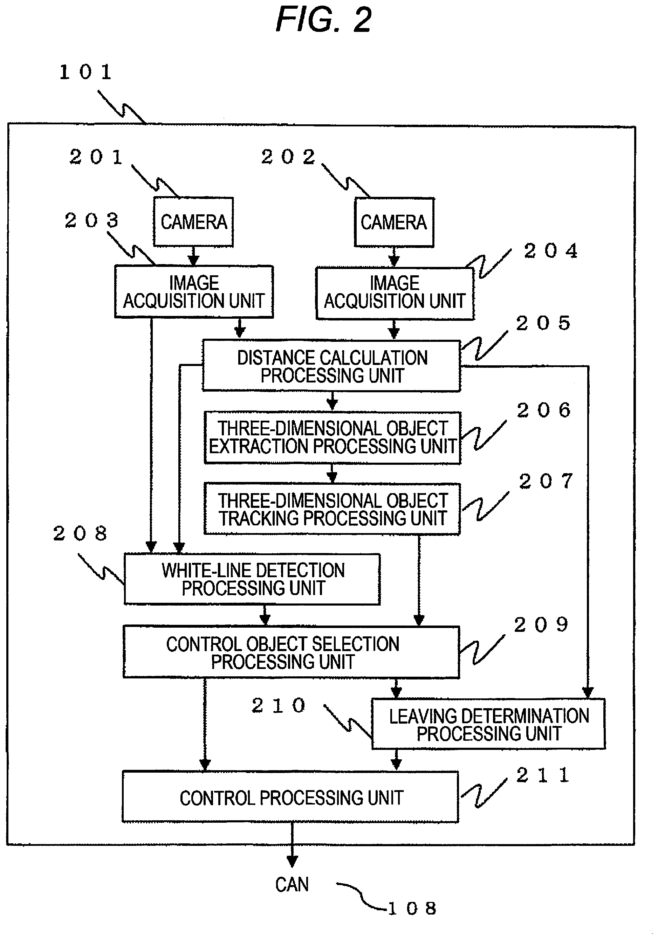

FIG. 2 is a functional block diagram illustrating the stereo camera 101 according to an example of the present invention.

In FIG. 2, a camera 201 and a camera 202 are installed in a horizontal direction around a rear view mirror in a vehicle interior, at a fixed interval, at the same height, and in the same direction so as to image an area ahead of a host vehicle. These cameras include an image sensor, such as a CCD or CMOS, are synchronized with each other, and are sampled at the same timing. The camera 201 and the camera 202 are an example of an external information acquisition unit.

An image acquisition unit 203 and an image acquisition unit 204 each convert a brightness value into a digital value so that an image captured by each of the camera 201 and the camera 202 can be processed by a processing unit, which is described later, correct the image captured by each of the camera 201 and the camera 202 to eliminate a difference in imaging environment or imaging characteristics between the two cameras, and pass image data to the next processing.

A distance calculation processing unit 205 divides the image acquired by the image acquisition unit 203 into a fixed block size (e.g., 4 × 4 [pix]), and calculates a distance in a real space for each of the divided blocks.

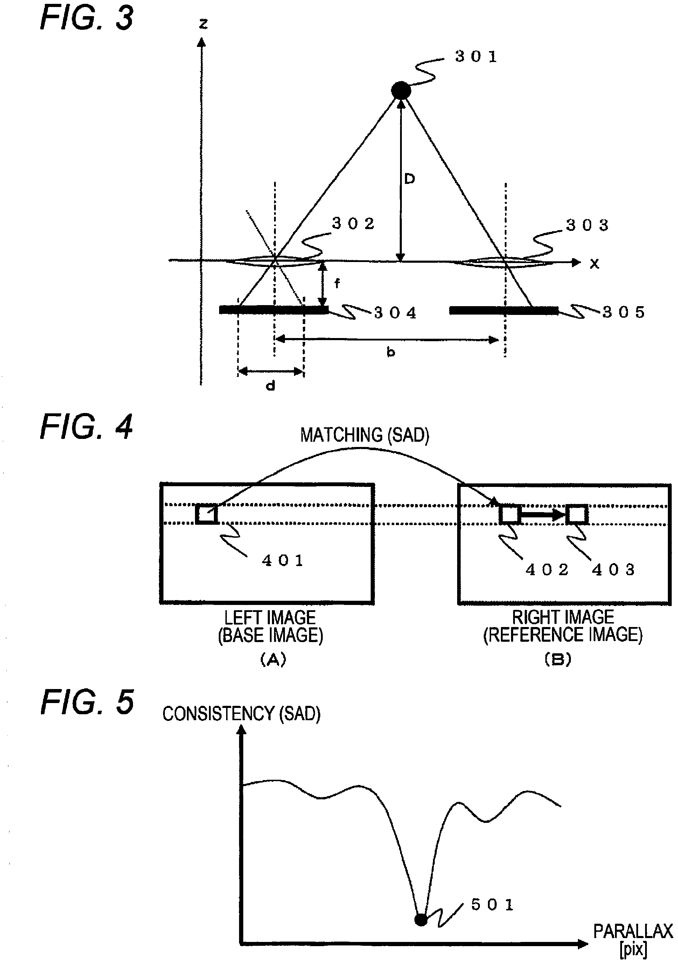

FIG. 3 is a diagram illustrating the principle of general distance measurement by using the stereo camera.

In FIG. 3, symbol D represents a distance from surfaces of a lens 302 and a lens 303 to a measurement point 301, f represents a distance (focal length) from the lens 302 and the lens 303 to an imaging surface 304 and an imaging surface 305, and b represents a distance (baseline length) between the centers of the lens 302 and the lens 303.

Furthermore, d represents a difference (parallax) between a position where the measurement point 301 is imaged on the imaging surface 304 through the lens 302 and a position where the measurement point 301 is imaged on the imaging surface 305 through the lens 303.

According to the similarity between triangles, the following formula (1) holds for these symbols.

$$D = b \times f/d \quad \ldots \quad (1)$$

In the above formula (1), the focal length f and the baseline length b are constants determined depending on the configuration of a camera, and thus, in order to obtain the distance D, it is required to calculate the parallax d which is a difference in appearance between the left and right lenses 302 and 303. A method of obtaining the parallax d will be described with reference to FIG. 4.

FIG. 4 is a diagram illustrating the principle of distance measurement, and when the camera 201 is installed on the left ((A) of FIG. 4) and the camera 202 is installed on the right ((B) of FIG. 4), an image captured by the camera 201 is represented as a left image (base image), and an image captured by the camera 202 is represented as a right image (reference image).

As illustrated in FIG. 4, an image 401 having a block size obtained by dividing the base image into blocks of a fixed size (e.g., 4 × 4 [pix] size) is compared with an image on the reference image which is gradually shifted by one pixel from an image 402 having the same height and size as those of the image 401 to an image 403 separated from the image 402 by a fixed number of pixels, and a consistency with the image 401 is calculated for each pixel.

Then, a block having a highest consistency in the right image is searched for, and an image showing the same target can be found from the right image, and the parallax d from the block 401 of the left image can be calculated.

The consistency between images can be calculated by using a sum of the absolute differences (SAD) in luminance difference between the pixels.

FIG. 5 is a graph illustrating consistency between images when the horizontal axis represents parallax [pix] and the vertical axis represents consistency (SAD). In FIG. 5, a minimum value 501 represents the parallax when the consistency is the highest.

As described above, the parallax d is obtained, and thus the distance D in a real space for each block can be calculated by using the above formula (1). In addition, the image 401 having a block size obtained by dividing the base image into blocks of a fixed size may have no texture (visual brightness) or the same image may not be found in the left and right images (e.g., the same target may a difference between the right and left images due to raindrops or the like on a windshield in front of the camera 101).

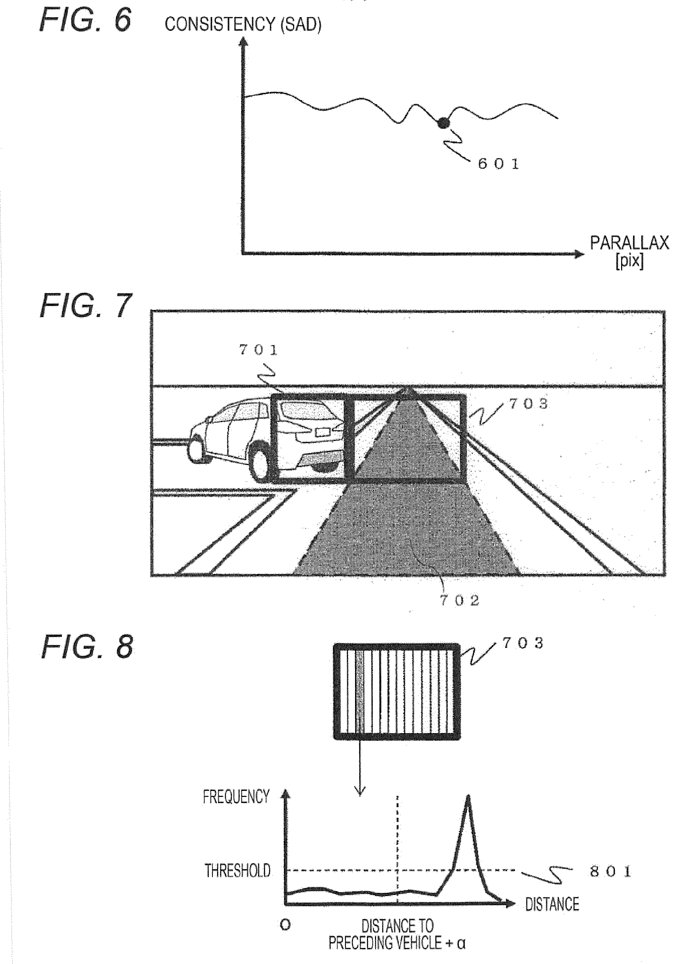

FIG. 6 is a graph illustrating consistency between images when the same image is not found in left and right images. As illustrated in FIG. 6, although there is a minimum value 601, consistency (SAD) is not relatively low, showing low reliability. Therefore, this parallax is invalid.

The parallax is determined to be effective or invalid on the basis of whether the consistency has a minimum value smaller than a threshold and a difference between an average value of surrounding consistencies and the minimum value is larger than a threshold.

A three-dimensional object extraction processing unit 206 extracts a three-dimensional object by using a distance image having distances determined for the respective blocks over the entire image obtained by the distance calculation processing unit 205.

Firstly, a histogram divided by the fixed distance units is created for the block columns of the distance image.

Then, when the number, in the histogram, indicated by a block column showing a peak distance (representative distance) having high frequency is equal to or larger than a threshold (variable according to the distance), it is determined that the block column has a three-dimensional object.

Next, when a difference between representative distances having peaks in the histogram and determined to have three-dimensional objects, between adjacent block columns, is equal to or smaller than a threshold (variable according to the distance), the three-dimensional objects are grouped as the same three-dimensional object.

Finally, when the width of the grouped three-dimensional object is equal to or larger than a threshold (variable according to the distance), the three-dimensional object is registered.

After registration of the three-dimensional object, blocks around the distance of the rows constituting the same three-dimensional object are grouped on the distance image, positions on the distance image (lower end, upper end, left end, and right end on the image) and a grouped distance are averaged, and a distance in a real space to the three-dimensional object is calculated.

Hereinafter, thus detected three-dimensional object is referred to as an extracted three-dimensional object (having a relative position to the host vehicle, a size, and the like as parameters).

The cameras 201 and 202, the image acquisition units 203 and 204, the distance calculation processing unit 205, and the three-dimensional object extraction processing unit 206, which are described above, constitute a three-dimensional object recognition unit.

A three-dimensional object tracking processing unit 207 tracks the extracted three-dimensional object obtained (detected) by the three-dimensional object extraction processing unit 206 in time series and calculates a relative speed from an amount of change in distance.

Furthermore, after filtering the parameters, such as the relative position to the host vehicle, size, and relative speed, the extracted three-dimensional object is output as a three-dimensional object to be tracked (having a filtered relative position to the host vehicle, size, relative speed, and the like as the parameters). Specifically, the following processing is repeated.

In other words, when there is a three-dimensional object to be tracked in a previous processed frame, an extracted three-dimensional object detected in a current frame to be processed is compared with the three-dimensional object to be tracked in the previous processed frame. Then, when a difference in each of the parameters of the three-dimensional objects is equal to or smaller than a threshold, it is determined that the parameters match each other, and the parameters of the three-dimensional object to be tracked included in the previous processed frame are updated by using the parameters of the extracted three-dimensional object included in the current frame to be processed.

Although the details of the updating are not described, for example, a Kalman filter can be used to set the extracted three-dimensional object as an observation value, and error variance can be obtained from a value actually measured.

In addition, an extracted three-dimensional object which does not match any of the three-dimensional objects to be tracked included in the previous processed frame is newly registered directly for the three-dimensional object to be tracked as an initial detected three-dimensional object.

A white-line detection processing unit 208 detects a white line according to the following procedure.

Firstly, when horizontal scanning is performed for each row on a luminance image, a portion where brightness changes dark → bright → dark is extracted as a candidate point. Next, on the basis of distance information obtained by the distance calculation processing unit 205, the position of each candidate point in a three-dimensional space is calculated, and on the basis of the three-dimensional position of this candidate point, approximation using a straight line or a curve is performed, obtaining white line position information L.

A control object selection processing unit 209 selects and specifies a three-dimensional object to be tracked which is most suitable for a preceding vehicle, from registered three-dimensional objects to be tracked which have been registered by the three-dimensional object tracking processing unit 207.

Specifically, in addition to a steering angle, yaw rate, and vehicle speed from the vehicle information unit 106 acquired via the CAN 108,, from the white line position information L obtained by the white-line detection processing unit 208, a host vehicle travel route R is predicted (estimated), and a three-dimensional object to be tracked located on the most front side on the travel route R is output as preceding vehicle position information P to the leaving determination processing unit 210 and the control processing unit 211.

Since the control object selection processing unit 209 estimates the host vehicle travel route R, the control object selection processing unit 209 can be defined as a host vehicle travel route estimation unit.

The leaving determination processing unit 210 determines whether the preceding vehicle has left on the basis of the preceding vehicle position information P obtained by the control object selection processing unit 209 and the travel route R.

Specifically, leaving determination is performed according to the following procedure.

FIGS. 7 and 8 are each an explanatory diagram illustrating the operation of the leaving determination processing unit 210 according to an example of the present invention.

Firstly, as illustrated in FIG. 7, the preceding vehicle position information P includes front image information of the host vehicle, and a measurement range 703, which is obtained according to the width of the host vehicle, including those of sideview mirrors, and the height of the preceding vehicle, is set at a horizontal center position of a host vehicle travel route 702 within the range of a distance between the preceding vehicle (automobile) 701 and the host vehicle.

Next, the set range 703 is divided into vertical strips, as illustrated in FIG. 8. Here, the set range 703 is divided into the vertical strips according to the block columns. Then, a density of effective parallax (the number of effective parallax blocks/the total number of blocks, within the range of the vertical strips) is calculated for each of the divided vertical strips.

In addition, a vote is casted for an effective parallax block in the histogram divided by the fixed distance units.

Here, when there is no peak information that exceeds a threshold 801 in front of (beyond) the distance equal to (the distance between the host vehicle and the preceding vehicle) +$\alpha$ ($\alpha$ is determined by experiment) and the vertical strips for which the density of effective parallax exceeds a preset threshold (value is determined by experiment) are present in the number equal to or larger than a threshold in the set range 703, it is determined that the preceding vehicle has left, and a leaving flag F is on No peak information that exceeds the threshold 801 in front of (beyond) the distance equal to (the distance to the preceding vehicle) +$\alpha$ means acquisition of information about the travel route ahead in the traveling direction beyond the distance of (the distance to the preceding vehicle) +$\alpha$.

This is because when the preceding vehicle is present on the travel route, the information ahead of the traveling direction cannot be obtained due to the preceding vehicle.

However, when even one vertical strip has the peak information that exceeds the threshold 801 in front of (beyond) the distance equal to (the distance to the preceding vehicle) +$\alpha$, the leaving flag F is not on.

Therefore, a wrong determination, caused by partial invalid parallax due to raindrops or the like, that the preceding vehicle or the like is not on the travel route is prevented, and leaving is accurately determined.

In other words, acquisition of image information in front of the host vehicle further beyond the distance obtained by adding a fixed amount α to the distance between the host vehicle and the preceding vehicle makes it possible to determine the leaving of the preceding vehicle without making a wrong determination.

Here, to the above conditions, detection of no three-dimensional object on the side of the host vehicle (behind the preceding vehicle) from the distance equal to (the distance to the preceding vehicle) +α on the travel route can be added. This is a condition considering entrance of another vehicle or the like in front of the host vehicle during or immediately after leaving of the preceding vehicle.

On the basis of the preceding vehicle position information P obtained by the control object selection processing unit 209, the leaving flag F obtained by the leaving determination processing unit 210, the host vehicle speed Vown obtained from the vehicle information unit 106, and the vehicle speed Vset (set vehicle speed) set by the steering switch 107, the control processing unit (travel control processing unit) 211 gives an instruction to the brake control unit 102 and the engine control unit 103 to perform ACC control and switchably performs constant speed control and following control.

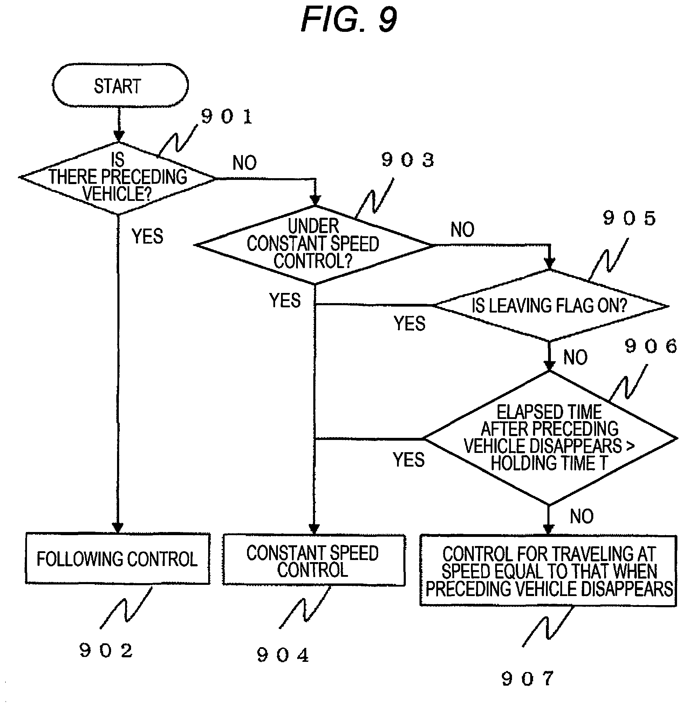

Specifically, control is performed according to a process illustrated in FIG. 9.

FIG. 9 is a flowchart illustrating a process of traveling control performed by the control processing unit 211 according to an example of the present invention.

As illustrated in FIG. 9, in step 901, it is determined whether there is a preceding vehicle, firstly.

Then, when it is determined that there is the preceding vehicle in step 901, the process proceeds to step 90, and following control set by the driver is performed.

In other words, in step 902, an instruction for a required drive force is given to the engine control unit 102 so as to have a constant distance to the preceding vehicle (e.g., when time headway is two seconds, 40 m at a host vehicle speed of 72 km/h is set), and the electronically controlled throttle 104 is opened for acceleration.

Similarly, an instruction for required hydraulic pressure is given to the brake control unit 103, causing the brake actuator 105 to generate generates the hydraulic pressure for deceleration or the like, and following control is performed.

Then, the process returns to step 901.

In step 901, when it is determined that there is no preceding vehicle, the process proceeds to step 903.

In step 903, it is determined whether the host vehicle is under constant speed control.

In step 903, when it is determined that the constant speed control is being performed, the process proceeds to step 904, and the constant speed control is performed.

In other words, in step 904, an instruction for a required drive force is given to the engine control unit 102 so that the host vehicle has a set vehicle speed, opening the electronically controlled throttle 104 for acceleration, and similarly, giving an instruction to the brake control unit 103 for required hydraulic pressure, causing the brake actuator 105 to generate the hydraulic pressure for deceleration or the like, and constant speed control 904 is performed.

Then, the process returns to step 901.

Here, in step 902, when the preceding vehicle disappears from view during following control, the process proceeds from step 901 to step 903, and in step 903, it is determined that the constant-speed control is not being performed. This is because there is no target vehicle for which constant speed traveling is performed since the preceding vehicle disappears from view.

In step 903, when it is determined that the constant speed control is not being performed, the process proceeds to step 905.

In step 905, it is confirmed whether the leaving flag F is on, and when the flag F is not on, the process proceeds to step 906.

In step 906, it is determined whether an elapsed time after the preceding vehicle disappears is larger than a holding time T (time period for holding the vehicle speed at that when the preceding vehicle disappears, even after the preceding vehicle disappears).

In step 906, when the elapsed time after the preceding vehicle disappears is equal to or less than the holding time T, the process proceeds to step 907. Then, in step 907, control for traveling at a speed equal to that when the preceding vehicle disappears is performed for the holding time T.

Then, the process returns to step 901.

In step 906, when the elapsed time after the preceding vehicle disappears exceeds the holding time T, the process proceeds to step 904.

In step 905, when the leaving flag F is on, the process proceeds to step 904 before expiration of the holding time T, and the vehicle is immediately accelerated from a vehicle speed equal to that when the preceding vehicle disappears, and the constant speed control is performed.

When the process proceeds from step 904 to step 901, and there is a new preceding vehicle in front of the host vehicle, following control is performed at a following travel speed according to the new preceding vehicle, in step 902. In step 901, when there is no preceding vehicle, the process proceeds to steps 903 and 904, and constant speed control is performed at a constant travel speed.

Here, in step 905, when the flag F is on, the process proceeds to step 904, and the constant speed control is immediately performed, but the vehicle speed equal to that when the preceding vehicle disappears may be held for a short holding time Tr (e.g., 1/2 or less of the holding time T) shorter than the holding time T having a certain time period.

Furthermore, the time Tr may be variable according to a situation ahead of the host vehicle. For example, in a case where a three-dimensional object to be tracked is detected in the measurement range 703, Tr is made longer when the distance is short, and conversely, Tr is made shorter when the distance is long, and thereby control can be performed without causing discomfort to the driver (driver of the host vehicle).

In addition, the above-mentioned disappearance (nondetection) represents that a preceding vehicle identified by the host vehicle travel route estimation unit cannot be detected and includes that the preceding vehicle has left the travel route and that the preceding vehicle cannot be detected for another reason. The leaving of the preceding vehicle from the travel route is defined as leaving of the preceding vehicle, and missing of the preceding vehicle which cannot be detected for another reason is defined as missing preceding vehicle.

As described above, in one example of the present invention, in a case where, while a preceding vehicle is being followed, the preceding vehicle is decelerated, for example, to make a left turn, and thereafter the preceding vehicle makes a left turn and disappears from view, when there is no peak information that exceeds a threshold 801 in front of the distance equal to (the distance to the preceding vehicle) +α (on the side of the host vehicle) and the vertical strips for which the density of effective parallax exceeds a preset threshold are present in the number equal to or larger than a threshold in a set range 703, it is determined that the preceding vehicle has left, such configuration makes it possible to accurately determine that the preceding vehicle has left, and appropriate vehicle control when the preceding vehicle makes a left turn or the like can be performed.

In other words, when a preceding vehicle identified by the host vehicle travel route estimation unit is missing, the travel control processing unit performs the constant speed control after holding a following travel speed for a certain holding time, and when the leaving determination processing unit determines that the preceding vehicle has left the travel route, the travel control processing unit performs the constant speed control after holding the following travel speed for a short holding time shorter than the certain holding time.

Therefore, it is possible to perform ACC control not causing discomfort to the driver by preventing holding the vehicle speed to that when the preceding vehicle disappears for a certain time period, though the preceding vehicle has been out of the host vehicle travel route. Thus, the vehicle driving assistance device can be achieved which can reduce an unnecessary vehicle speed holding time causing discomfort to a driver of a vehicle, and can assist the smooth travel of the vehicle.

In addition, the vehicle driving assistance device can be achieved which is configured so that when the preceding vehicle disappears, natural acceleration is allowed, and it is possible to suppress obstruction of smooth traveling of the following vehicle, and smooth traveling of the vehicle can be assisted.

In the examples described above, the stereo camera 101 is used as the external environment recognition sensor, but, in addition to the stereo camera, the present invention can be also achieved by using laser radar, millimeter-wave radar, monocular camera, and the like, which are a distance detection sensor having vertical and horizontal resolution.

Thus, the present invention is not limited to the stereo camera.

Moreover, in the examples described above, the automobile is used as the vehicle, but the present invention is also applicable to, for example, an automated component transport vehicle or autonomous industrial robot in a factory.

Reference Signs List

| | |
|---|---|
| 100 | vehicle driving assistance device |
| 101 | stereo camera |
| 102 | engine control unit |
| 103 | brake control unit |
| 104 | electronically controlled throttle |
| 105 | brake actuator |
| 106 | vehicle information unit |
| 107 | steering unit |
| 108 | CAN |
| 201, 202 | camera |
| 203, 204 | image acquisition unit |
| 205 | distance calculation processing unit |
| 206 | three-dimensional object extraction processing unit |
| 207 | three-dimensional object tracking processing unit |
| 208 | white-line detection processing unit |
| 209 | control object selection processing unit |
| 210 | leaving determination processing unit |
| 211 | control processing unit |
| 701 | preceding vehicle |
| 702 | host vehicle travel route |
| 703 | measurement range |

Claims

1. A vehicle driving assistance device (100), comprising:

an external information acquisition unit (201, 202) configured to acquire external information on a host vehicle;
a three-dimensional object recognition unit configured to recognize three-dimensional objects ahead of the host vehicle, from the external information acquired by the external information acquisition unit (201, 202);
a host vehicle travel route estimation unit (209) configured to estimate a host vehicle travel route (702) and to identify a preceding vehicle (701) traveling ahead on the host vehicle travel route (702) by selecting and specifying a three-dimensional object from registered three-dimensional objects to be tracked which have been registered by a three-dimensional object tracking processing unit (207); and
a leaving determination processing unit (210) configured to determine leaving of the preceding vehicle (701) from the host vehicle travel route (702) relative to a preceding vehicle position information (P) obtained by the host vehicle travel route estimation unit (209) as the three-dimensional object to be tracked located on a most front side on the host vehicle travel route (702), wherein the preceding vehicle position information (P) includes a measurement range (703) which is set at a horizontal center position of the host vehicle travel route (702) within a distance range between the preceding vehicle (701) and the host vehicle, **characterised in that**
the vehicle driving assistance device (100) is configured to determine that the preceding vehicle (701) left the host vehicle travel route (702) in a case when a calculated distance range associated with the preceding vehicle, and obtained by dividing the parallax into vertical strips, exceeds a threshold value (801) in a traveling direction of the vehicle, said threshold being increased by adding a fixed amount to the distance between the preceding vehicle (701) and the host vehicle.

2.  The vehicle driving assistance device (100) according to claim 1, further comprising:

    a travel control processing unit (211) configured to switchably perform constant speed control for holding a vehicle speed of the host vehicle at a constant speed and following control for following the preceding vehicle (701), on the basis of the determination of the leaving determination processing unit (210), wherein,
    when the preceding vehicle (701) identified by the host vehicle travel route estimation unit (209) is missing, the travel control processing unit (211) is configured to perform the constant speed control after holding a following travel speed for a certain holding time, and
    when the leaving determination processing unit (210) determines that the preceding vehicle (701) has left the travel route, the travel control processing unit (211) is configured to perform the constant speed control after holding the following travel speed for a short holding time shorter than the certain holding time.

3.  The vehicle driving assistance device (100) according to claim 2, further comprising:
    a vehicle operation control unit (106) configured to control operation of the host vehicle according to a control instruction given from the travel control processing unit (211).

4.  The vehicle driving assistance device (100) according to any one of the claims 1 to 3, wherein the vertical strips correspond to a histogram of parallax blocks divided by fixed distance units.

**Patentansprüche**

1.  Fahrzeugfahrassistenzvorrichtung (100), umfassend:

    eine externe Informationserfassungseinheit (201, 202), die konfiguriert ist, um externe Informationen über ein Host-Fahrzeug zu erfassen;
    eine dreidimensionale Objekterkennungseinheit, die konfiguriert ist, um dreidimensionale Objekte vor dem Host-Fahrzeug aus den von der externen Informationserfassungseinheit (201, 202) erfassten externen Informationen zu erkennen;
    eine Host-Fahrzeugfahrroutenschätzeinheit (209), die konfiguriert ist, um eine Host-Fahrzeugfahrroute (702) zu schätzen und ein vorausfahrendes Fahrzeug (701), das auf der Host-Fahrzeugfahrroute (702) vorfährt, durch Auswählen und Spezifizieren eines dreidimensionalen Objekts aus registrierten dreidimensionalen Objekten, die verfolgt werden sollen, die von einer dreidimensionalen Objektverfolgungsverarbeitungseinheit (207) registriert wurden, zu identifizieren; und
    eine Verlassenbestimmungsverarbeitungseinheit (210), die konfiguriert ist, um das Verlassen des vorausfahrenden Fahrzeugs (701) von der Host-Fahrzeugfahrroute (702) relativ zu einer vorausfahrenden Fahrzeugpositionsinformation (P), die von der Host-Fahrzeugfahrroutenschätzeinheit (209) erhalten wurde, als das dreidimensionale Objekt, das verfolgt werden soll, das sich auf einer vordersten Seite auf der Host-Fahrzeugfahrroute (702) befindet, zu bestimmen, wobei die vorausfahrende Fahrzeugpositionsinformation (P) einen Messbereich (703) beinhaltet, der an einer horizontalen Mittelposition der Host-Fahrzeugfahrroute (702) innerhalb eines Abstandsbereichs zwischen dem vorausfahrenden Fahrzeug (701) und dem Host-Fahrzeug eingestellt ist, **dadurch gekennzeichnet, dass**

die Fahrzeugfahrassistenzvorrichtung (100) konfiguriert ist, um zu bestimmen, dass das vorausfahrende Fahrzeug (701) die Host-Fahrzeugfahrroute (702) in einem Fall verlassen hat, wenn ein berechneter Abstandsbereich, der mit dem vorausfahrenden Fahrzeug assoziiert ist und durch Teilen der Parallaxe in vertikale Streifen erhalten wird, einen Schwellenwert (801) in einer Fahrtrichtung des Fahrzeugs überschreitet, wobei der Schwellenwert durch Hinzufügen eines festen Betrags zu dem Abstand zwischen dem vorausfahrenden Fahrzeug (701) und dem Host-Fahrzeug erhöht wird.

2. Fahrzeugfahrassistenzvorrichtung (100) nach Anspruch 1, ferner umfassend:

eine Fahrsteuerungsverarbeitungseinheit (211), die konfiguriert ist, um eine Konstantgeschwindigkeitssteuerung zum Halten einer Fahrzeuggeschwindigkeit des Host-Fahrzeugs bei einer konstanten Geschwindigkeit und eine Folgesteuerung zum Folgen des vorausfahrenden Fahrzeugs (701) auf der Grundlage der Bestimmung der Verlassenbestimmungsverarbeitungseinheit (210) schaltbar durchzuführen, wobei,

wenn das vorausfahrende Fahrzeug (701), das von der Host-Fahrzeugfahrroutenschätzeinheit (209) identifiziert wurde, fehlt, die Fahrsteuerungsverarbeitungseinheit (211) konfiguriert ist, um die Konstantgeschwindigkeitssteuerung nach Halten einer Folgefahrgeschwindigkeit für eine bestimmte Haltezeit durchzuführen, und wenn die Verlassenbestimmungsverarbeitungseinheit (210) bestimmt, dass das vorausfahrende Fahrzeug (701) die Fahrroute verlassen hat, die Fahrsteuerungsverarbeitungseinheit (211) konfiguriert ist, um die Konstantgeschwindigkeitssteuerung nach Halten der Folgefahrgeschwindigkeit für eine kurze Haltezeit, die kürzer als die bestimmte Haltezeit ist, durchzuführen.

3. Fahrzeugfahrassistenzvorrichtung (100) nach Anspruch 2, ferner umfassend:
eine Fahrzeugbetriebssteuerungseinheit (106), die konfiguriert ist, um den Betrieb des Host-Fahrzeugs gemäß einer von der Fahrsteuerungsverarbeitungseinheit (211) gegebenen Steuerungsanweisung zu steuern.

4. Fahrzeugfahrassistenzvorrichtung (100) nach einem der Ansprüche 1 bis 3, wobei die vertikalen Streifen einem Histogramm von Parallaxenblöcken, die durch Einheiten mit festem Abstand geteilt sind, entsprechen.

**Revendications**

1. Dispositif d'assistance à la conduite de véhicule (100), comprenant :

une unité d'acquisition d'informations externes (201, 202) configurée pour acquérir des informations externes sur un véhicule hôte ;
une unité de reconnaissance d'objets tridimensionnels configurée pour reconnaître des objets tridimensionnels devant le véhicule hôte, à partir des informations externes acquises par l'unité d'acquisition d'informations externes (201, 202) ;
une unité d'estimation d'itinéraire de déplacement de véhicule hôte (209) configurée pour estimer un itinéraire de déplacement de véhicule hôte (702) et pour identifier un véhicule précédent (701) se déplaçant devant sur l'itinéraire de déplacement de véhicule hôte (702) en sélectionnant et en spécifiant un objet tridimensionnel parmi des objets tridimensionnels enregistrés à suivre qui ont été enregistrés par une unité de traitement de suivi d'objet tridimensionnel (207) ; et
une unité de traitement de détermination de sortie (210) configurée pour déterminer la sortie du véhicule précédent (701) de l'itinéraire de déplacement de véhicule hôte (702) par rapport à des informations de position de véhicule précédent (P) obtenues par l'unité d'estimation d'itinéraire de déplacement de véhicule hôte (209) en tant qu'objet tridimensionnel à suivre situé sur un côté le plus en avant sur l'itinéraire de déplacement de véhicule hôte (702), dans lequel les informations de position de véhicule précédent (P) comprennent une plage de mesure (703) qui est réglée à une position centrale horizontale de l'itinéraire de déplacement de véhicule hôte (702) dans une plage de distance entre le véhicule précédent (701) et le véhicule hôte, **caractérisé en ce que**
le dispositif d'assistance à la conduite de véhicule (100) est configuré pour déterminer que le véhicule précédent (701) a quitté l'itinéraire de déplacement de véhicule hôte (702) dans un cas où une plage de distance calculée associée au véhicule précédent, et obtenue en divisant la parallaxe en bandes verticales, dépasse une valeur de seuil (801) dans une direction de déplacement du véhicule, ledit seuil étant augmenté en ajoutant une quantité fixe à la distance entre le véhicule précédent (701) et le véhicule hôte.

2. Dispositif d'assistance à la conduite de véhicule (100) selon la revendication 1, comprenant en outre :

une unité de traitement de commande de déplacement (211) configurée pour réaliser de manière commutable une commande de vitesse constante pour maintenir une vitesse de véhicule du véhicule hôte à une vitesse constante et une commande de suivi pour suivre le véhicule précédent (701), sur la base de la détermination de l'unité de traitement de détermination de sortie (210), dans lequel,

lorsque le véhicule précédent (701) identifié par l'unité d'estimation d'itinéraire de déplacement de véhicule hôte (209) est manquant, l'unité de traitement de commande de déplacement (211) est configurée pour réaliser la commande de vitesse constante après avoir maintenu une vitesse de déplacement de suivi pendant un certain temps de maintien, et

lorsque l'unité de traitement de détermination de sortie (210) détermine que le véhicule précédent (701) a quitté l'itinéraire de déplacement, l'unité de traitement de commande de déplacement (211) est configurée pour réaliser la commande de vitesse constante après avoir maintenu la vitesse de déplacement de suivi pendant un court temps de maintien plus court que le certain temps de maintien.

3. Dispositif d'assistance à la conduite de véhicule (100) selon la revendication 2, comprenant en outre : une unité de commande de fonctionnement de véhicule (106) configurée pour commander le fonctionnement du véhicule hôte selon une instruction de commande donnée par l'unité de traitement de commande de déplacement (211).

4. Dispositif d'assistance à la conduite de véhicule (100) selon l'une quelconque des revendications 1 à 3, dans lequel les bandes verticales correspondent à un histogramme de blocs de parallaxe divisés par des unités de distance fixe.

## FIG. 1

100

# FIG. 2

*FIG. 3*

*FIG. 4*

MATCHING (SAD)

LEFT IMAGE
(BASE IMAGE)
(A)

RIGHT IMAGE
(REFERENCE IMAGE)
(B)

*FIG. 5*

CONSISTENCY (SAD)

PARALLAX
[pix]

13

*FIG. 6*   CONSISTENCY (SAD)

601

PARALLAX
[pix]

*FIG. 7*

701

703

702

*FIG. 8*

703

FREQUENCY

THRESHOLD

801

DISTANCE

O   DISTANCE TO
PRECEDING VEHICLE + α

14

# FIG. 9

```
                    START
                      │
                      ▼
              ┌───────────────┐
              │      IS       │──── 901          903
              │ THERE PRECEDING│   NO      ┌──────────────┐
              │   VEHICLE?    │──────────▶│    UNDER     │──── 905
              └───────────────┘           │CONSTANT SPEED│  NO    ┌──────────────┐
                   YES                     │  CONTROL?    │──────▶│IS LEAVING FLAG│
                    │                      └──────────────┘       │    ON?       │
                    │                          YES                └──────────────┘
                    │                           │        YES           │ NO    906
                    │                           │                      ▼
                    │                           │              ┌──────────────┐
                    │                           │              │ ELAPSED TIME │
                    │                           │              │AFTER PRECEDING│
                    │                           │              │VEHICLE DISAPPEARS >│
                    │                           │       YES    │ HOLDING TIME T│
                    │                           │◀─────────────└──────────────┘
                    ▼                           ▼                      │ NO
         ┌──────────────────┐      ┌──────────────────┐    ┌──────────────────────┐
         │FOLLOWING CONTROL │      │ CONSTANT SPEED   │    │CONTROL FOR TRAVELING AT│
         │                  │      │    CONTROL       │    │SPEED EQUAL TO THAT WHEN │
         └──────────────────┘      └──────────────────┘    │PRECEDING VEHICLE DISAPPEARS│
                 902                       904              └──────────────────────┘
                                                                      907
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009018727 A
- JP 2005081999 A
- US 2009125204 A1
- JP 2009149255 A